# EUROPEAN PATENT SPECIFICATION

(11) **EP 1 261 158 B1**
(45) Date of publication and mention of the grant of the patent: **01.10.2003**
(21) Application number: 02253211.3
(22) Date of filing: 08.05.2002
(51) Int. Cl.: H04J 11/00

(54) **Walsh code allocation/de-allocation system**
System zur Zuweisung und Freigabe von Walsh-Codes
Système d'assignement et de libération de codes Walsh

(30) Priority: 16.05.2001 US 858382
(43) Date of publication of application: 27.11.2002
(73) Proprietor: LUCENT TECHNOLOGIES INC., Murray Hill, New Jersey 07974-0636 (US)
(72) Inventor: Meier, Steven K., Batavia, Illinois 60510 (US); Palm, Christopher D., Naperville, Illinois 60540 (US); Welsh, Steven M., Aurora, Illinois 60504 (US); Burgess, John K., Morristown, New Jersey 07960-6306 (US)
(74) Representative: Watts, Christopher Malcolm Kelway, Dr.

(56) References cited:
- EP-A- 0 944 198
- US-A- 6 041 034
- US-A- 6 163 524

## Description

This invention relates to methods of allocating code division multiple access (CDMA) codes from a set thereof, and to CDMA code allocators.

Walsh codes, spreading codes, channelization codes and the like are generally known in the art of wireless telecommunication networks. In particular, Walsh codes and/or Walsh functions are based on the Walsh-Hadamard matrices. However, for simplicity herein, the terms Walsh code and/or Walsh function are used to refer generally to any similarly employed spreading codes/functions, channelization codes/functions, etc. In CDMA, Walsh functions are used in a forward direction to organize network traffic over an air interface into different channels that can be isolated and decoded by target mobiles, e.g., wireless telephones, wireless personal digital assistants (PDAs) or other wireless devices. The forward or downlink direction refers to a transmitting direction from a base station to a mobile station.

At any given time for the same sector/carrier within a given cell site of a wireless telecommunications network, all the Walsh codes in use have to be mutually orthogonal with each other in order to properly organize the network traffic without interference or cross-talk between the different channels. This restriction was not particularly problematic for second generation wireless systems using CDMA. Second generation wireless generally encompasses the so called digital personal communications service (PCS). In any event, 2^{nd} generation systems using CDMA only employ Walsh codes of a single size or bit length and all the codes used are guaranteed to be orthogonal to one another. For example, 64 Walsh codes each 64 bits in length are used in the typical implementation of 2^{nd} generation systems.

As opposed to the 2^{nd} generation, 3G wireless systems employing CDMA use Walsh codes of varying sizes or bit lengths. For example, traffic such as voice calls typically continue to use 64-bit Walsh codes. However, in 3G, some voice calls or traffic may use 128-bit Walsh codes. Similarly, for high-speed data traffic (e.g., wireless Internet access), 3G wireless makes available a variety of Walsh codes with shorter lengths, e.g., 32, 16, 8 and 4 bit lengths. Accordingly, unlike the 2^{nd} generation which uses uniformly sized Walsh codes, Walsh code allocation in 3G CDMA wireless is not trivial. Walsh code allocation refers to the selection and/or assignment of Walsh codes for the different channels of cell traffic. Generally, it is preferable to employ shorter bit length Walsh codes for higher speed traffic.

In 3G CDMA wireless, variable size Walsh codes are made available for use. Consequently, all the available Walsh codes for the same sector/carrier within a given cell site are not guaranteed to be mutually orthogonal and their allocation fails to be a trivial matter. More specifically, each Walsh function in the set of Walsh functions having a bit length or size of N is non-orthogonal to: two Walsh functions in the set of Walsh functions of size 2N; four Walsh functions in the set of Walsh functions of size 4N; eight Walsh functions in the set of Walsh functions of size 8N; and so on. In particular, **W**ₖ^{N} is non-orthogonal to:
**W**ₖ^{2N} and **W**_{(k+N)}^{2N};
**W**ₖ^{4N}, **W**_{(k+N)}^{4N}, **W**_{(k+2N)}^{4N} and **W**_{(k+3N)}^{4N};
**W**ₖ^{8N}, **W**_{(k+N)}^{8N}, **W**_{(k+2N)}^{8N}, **W**_{(k+3N)}^{8N}, **W**_{(k+4N)}^{8N}, **W**_{(k+5N)}^{8N}, **W**_{(k+6N)}^{8N} and **W**_{(k+7N)}^{8N}; ...
**W**₍ₖ₎^{(2^n)N}, **W**_{(k+N)}^{(2^n)N}, **W**_{(k+2N)}^{(2^n)N}, **W**_{(k+3N)}^{(2^n)N}, **W**_{(k+4N)}^{(2^n)N} ... and **W**_{(k+((2^n)-1)N)}^{(2^n)N}.
Regarding notation, **W**^{N} represents the set of Walsh functions/codes having a size or bit length of N, and **W**ₖ^{N} represents the k^{th} element of **W**^{N} (note: the number or value of k used to reference a particular element does not necessarily equate to the binary representation of the corresponding Walsh code).

Accordingly, the problem presented with the advent of 3G CDMA wireless involves the manner in which to allocate Walsh codes while ensuring the mutual orthogonality of all the concurrently used codes for the same sector/carrier within a given cell site. It is desirable, moreover, to carry out the allocation in such a manner that the number of Walsh codes remaining available for allocation at any given time is maximized. In this manner, efficient use of the cell's finite bandwidth and/or finite number of Walsh codes can be achieved. It is also desirable to maintain as great of a variety of Walsh code sizes available at any given time so that the greatest range of access speeds can be optimally accommodated (i.e., appropriately sized Walsh codes can be allocated) at any given time. Typically, this means reserving shorter bit length Walsh codes whenever possible.

Even though all the concurrently allocated Walsh codes may be mutually orthogonal, it is possible for the allocated Walsh codes to be selected such that the signal that is sent to the base station's amplifier exceeds an acceptable peak-to-average power ratio. The risk is that without a suitable allocation system the amplifier will be caused to operate in a non-linear manner and undesirable interference will be experienced in one or more frequency spectrums where it should not be. Accordingly, it is also desirable that the Walsh code allocation be implemented to avoid or minimize this risk, i.e., to maintain the peak-to-average power ratio at or below acceptable levels.

The present invention contemplates a new and improved Walsh code allocation/de-allocation system and method which overcomes or minimizes the above-referenced problems and others.

EP-A-0 944 198 is directed to CDMA code assignment. It focuses in particular on initial code assignment and the switching of code assignments for particular mobile stations in a wireless telecommunications network. The CDMA codes are arranged in a single code family (i.e., with a single root code) from which all code assignments are made in accordance with designated selection criteria. US-A-6,163,524 is essentially the same in that it teaches using designated selection criteria to assign CDMA codes which are all selected from a single CDMA code family that branches out of one root code.

According to one aspect of this invention there is provided a method as claimed in claim 1.

According to another aspect of this invention there is provided a CDMA code allocator as claimed in claim 5.

A method of allocating CDMA codes from a set of the same is provided for use in connection with a wireless network. The method includes, after identifying a desired size of the code to be allocated, determining if there exists a code of the desired size whose sibling is unavailable. If such a code is found, then it is simply allocated. Otherwise, it is determined if there exists a code of smaller than the desired size whose sibling is unavailable. When such a code (i.e., a code of smaller than the desired size whose sibling is unavailable) is found, a descendant thereof which has the desired size is allocated.

A Walsh code allocator is provided for use in connection with a wireless telecommunications network. The allocator receives a request for a Walsh code, and chooses, based on the request received, a Walsh code family from which the allocator selects a Walsh code. The Walsh code family chooses from a plurality of different Walsh code families which each include a plurality of Walsh codes of at least two different sizes. From the chosen family, a Walsh code suited to the request received is selected. The Walsh code is selected such that it is mutually orthogonal to Walsh codes which are currently busy, and such that an allocation thereof results in blocking a minimum number of Walsh codes not already blocked. Either the selected Walsh code is output by the allocator, or the allocator outputs an indication that a Walsh code suited to the request received is not available for allocation.

A method is provided for allocating a set of codes used to distinguish and isolate air interface channels of a wireless telecommunications network. The method includes dividing the codes into a plurality of families such that each family includes a plurality of codes. Each of said codes has a size and at least two codes in each family have different sizes. The method further includes receiving a request for a code which identifies a desired size of code, and choosing a family from which a code is to be selected for allocation. A fragmented code is identified in the chosen family provided one exists, and a code in the chosen family is selected based on the identified fragmented code provided a fragmented code was identified, otherwise, no selection is made. The selected code is the one allocated provided a selection was made, otherwise it is indicated that no code is available.

One advantage of the present invention resides in the ability to ensure that only orthogonal Walsh codes are concurrently allocated. Another advantage of the present invention resides in the ability to achieve efficient use of a cell's finite bandwidth and finite number of Walsh codes.

In selected embodiments, yet another advantage of the present invention resides in the ability to maintain the greatest possible variety of available Walsh code sizes for optimal allocation of the greatest range of access speeds. One other advantage achieved by selected embodiments of the present invention resides in the ability to avoid or minimize the risk of exceeding the base station amplifier's acceptable peak-to-average power ratio.

Still further advantages and benefits of the present invention will become apparent to those of ordinary skill in the art upon reading and understanding the following detailed descriptiow of the preferred embodiments.

### Brief Description of the Drawing(s)

The invention may take form in various components and arrangements of components, and in various steps and arrangements of steps. The drawings are only for purposes of illustrating preferred embodiments and are not to be construed as limiting the invention.

FIGURE 1 is a diagrammatic illustration showing a telecommunications network incorporating a Walsh code allocator.

FIGURE 2 is a table of Walsh codes used by the Walsh code allocator.

FIGURE 3 is a flow chart showing an allocation process carried out by the Walsh code allocator.

FIGURE 4 is a flow chart showing a de-allocation process carried out by the Walsh code allocator.

### Detailed Description of the Preferred Embodiment(s)

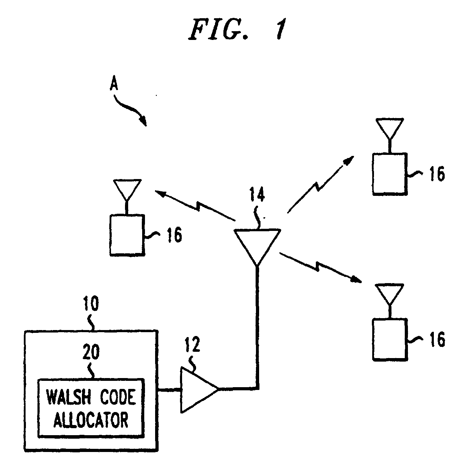

FIGURE 1 shows at least a portion of a wireless telecommunications network **A** including a cell base station **10** with a signal amplifier **12** and a transmit/receive antenna **14** and a plurality of mobile targets or stations **16** (e.g., wireless phones, wireless PDAs, etc.). With the exception of the novel Walsh code allocation/de-allocation system and method of the present invention, the network **A** is well known and its operation and configuration is readily understood by those skilled in the art. Again, with the exception of the novel Walsh code allocation/de-allocation system and method of the present invention, the network **A** preferably implements 3G wireless CDMA technology in the usual manner.

In accordance with a preferred embodiment of the present invention, the base station **10** includes a Walsh code allocator **20** which assigns or designates selected Walsh codes/functions to the network traffic relayed over the air interface between the base station **10** and the mobile stations **16** such that at any given time each channel thereon is associated with a corresponding unique and mutually orthogonal Walsh code/function. In this manner, a plurality of different channels existing concurrently between the base station **10** and mobile stations **16** can be isolated and distinguished. The Walsh code allocator **20** is optionally implemented via a hardware configuration, a software configuration or a combination of both. For example, the Walsh code allocator **20** is optionally embodied in a dedicated microprocessor (application specific or otherwise), a software object implemented via or running on the base station's existing hardware or processors, or some combination thereof. In one preferred embodiment, the allocator **20** also de-allocates codes.

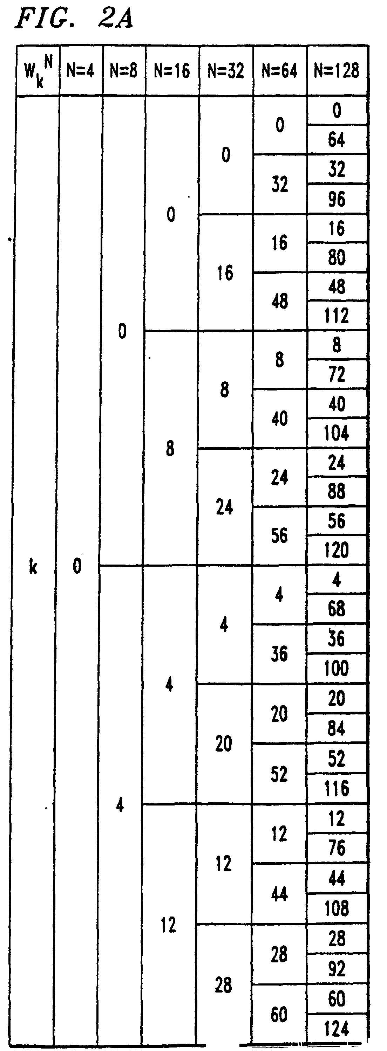

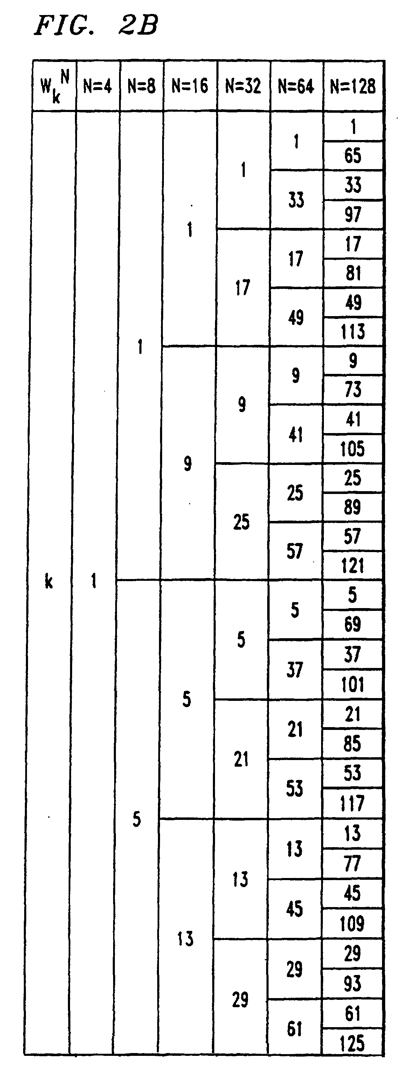

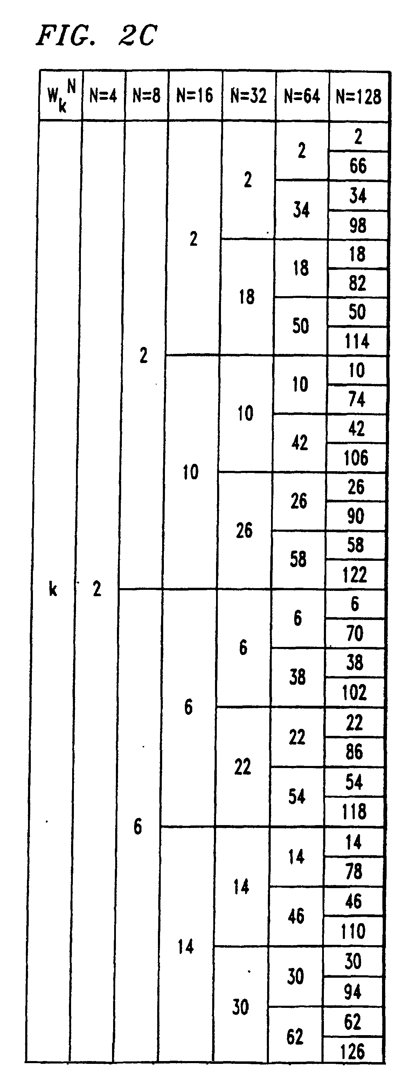

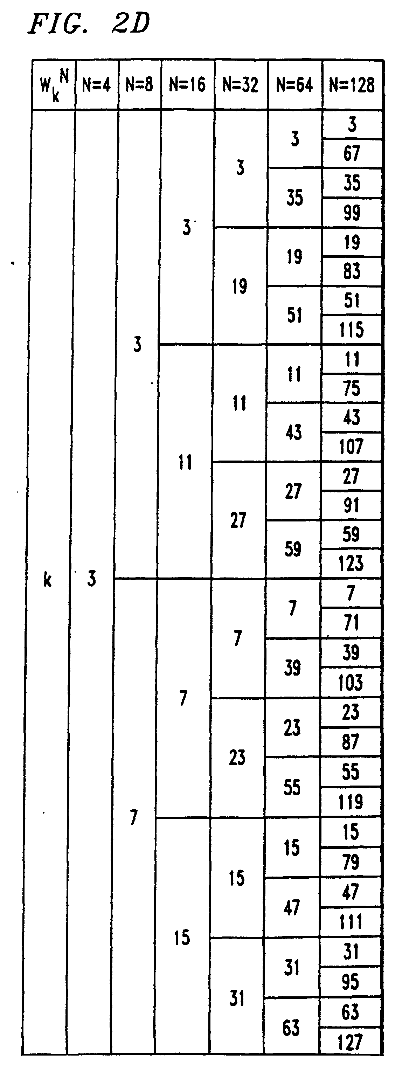

With reference to FIGURE 2, an exemplary table or matrix including all the Walsh codes used by the Walsh code allocator **20** is shown. Optionally, the table is a look up table (LUT) accessed by the allocator **20**. Six Walsh code sizes are used, namely, **W**⁴, **W**⁸, **W**¹⁶, **W**³², **W**⁶⁴ and **W**¹²⁸. The various sizes correspond to the table columns. Within each size there are a number of orthogonal Walsh codes, the number being equal to the size. That is, **W**⁴ includes 4 Walsh codes which are mutually orthogonal to one another and each has a bit length of 4, they are individually referenced by k = 0, 1, and 3; **W**⁸ includes 8 Walsh codes which are mutually orthogonal to one another and each has a bit length of 8, they are individually referenced by k = 0, 1, 2, 4, 5, 6 and 7; and so on for each size.

The table is arranged into four binary trees extending from left to right. Each tree is a Walsh Code Family (WCF) designated by its root node, i.e., the **W**₀⁴ family, **W**₁⁴ family, **W**₂⁴ family and **W**₃⁴ family. In each family, the respective relationships between Walsh codes are describe with reference to parents, children and siblings. Each parent Walsh code has two children Walsh codes which are siblings to one another. The two children of any parent are the two Walsh codes immediately adjacent and to the right of the parent. The Walsh codes are arranged in the table such that the descendants or progeny (i.e., the children, grandchildren, great-grandchildren, etc.) of any parent Walsh code are not orthogonal to that parent. Likewise, the parental ancestors (i.e., the parent, grandparent, great-grandparent, etc.) of any child are not orthogonal to that child. Siblings, however, are orthogonal. In other words, siblings are any pair of mutually orthogonal Walsh codes of the same size which are both non-orthogonal children to the same parent Walsh code of half their size.

For purposes of the description herein, the following terms are being defined. A fragmented Walsh code is any Walsh code which is the sibling of any blocked or busy Walsh code. Additionally, while not otherwise considered fragmented, at least one Walsh code of the smallest size in each family is deemed fragmented. A busy Walsh code is any Walsh code that has been allocated by the allocator **20** and is still presently allocated or assigned to a channel. A blocked Walsh code is any Walsh code, the allocation of which would result in two or more busy Walsh codes being non-orthogonal. Accordingly, in a preferred embodiment of the present invention, the progeny and parental ancestors of any busy Walsh code are blocked. A blocked Walsh code is prohibited or "blocked" from being allocated to a channel by the allocator **20**. A Walsh code which is either blocked or busy is termed unavailable.

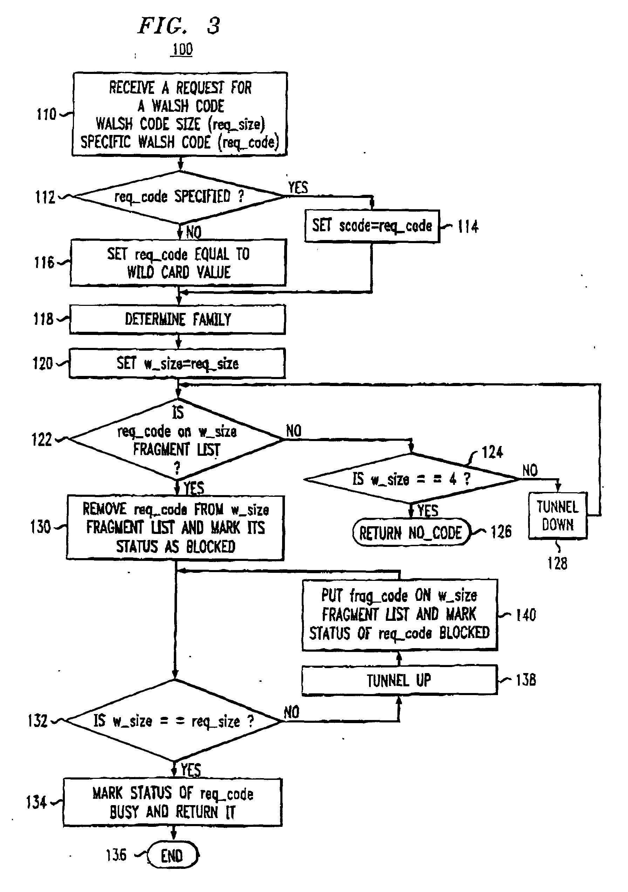

In accordance with a preferred embodiment of the present invention, the flow chart of FIGURE 3 illustrates the allocation process **100** carried out by the Walsh code allocator **20**, i.e., the method by which Walsh codes are allocated and/or assigned to channels of cell traffic. The process **100** begins at step **110** with the allocator **20** receiving a request for a Walsh code. For example, the request is generated in conjunction with the establishment of a new channel and/or is precipitated by the opening of a channel, be it an overhead channel, a fundamental channel of voice or data traffic, or otherwise. The received request includes an indication of the Walsh code size desired. Optionally, a particular Walsh code is specified, e.g., for a particular overhead channel. In the flow chart, the requested size is denoted by the value "req_size" and the requested code is denoted by the variable "req_code". Both are initially set in accordance with the received request. Through out the process **100** the req_size value remains unchanged while req_code may vary.

At decision step **112**, it is determined if a particular code was specified. If the determination of step **112** is positive or yes, the value of "scode" is set equal to the current (i.e., initial) value of req_code at step **114**. The unchanging scode preserves the value of the initial requested code when a particular code is specified. If the determination of step **112** is negative or no, req_code is set equal to a wild card value at step **116**.

At step **118**, the WCF is determined and/or selected. Determining the WCF is relatively straight forward when a particular code has been specified, it is scode%4, where "%" represent the modulus operator which returns the remainder of the first argument divided by the second argument, i.e., scode%4 equals the remainder of scode divided by 4. In this manner, the WCF containing the particular code specified is identified and/or selected. On the other hand, there are a number of options for WCF selection when no particular code is specified in the request. In one preferred embodiment, a particular WCF (e.g., the **W**₃⁴ family) may be set aside or designated for high speed data traffic. Accordingly, if it is determined that the channel or request is for high speed data, that particular WCF is optionally selected automatically. Otherwise, the WCF with the lowest "count" is selected. The count is measured by and/or equal to the number of Walsh codes of the largest size (i.e., **W**¹²⁸) which are either busy or blocked. By selecting the WCF with the lowest count, Walsh code allocation is balanced across the families and the risk of exceeding the maximum acceptable peak-to-average power ratio of the amplifier **12** is minimized.

In any event, once the WCF is determined and/or selected, the rest of the process **100** for that request is carried out within that family.

At step **120**, the variable "w_size" is set equal to req_size. As will be appreciated from the description herein, the variable w_size is used so that, among other things, the process **100** may, in various steps thereof, tunnel back and forth or step through the different Walsh code sizes while maintaining the integrity or value of the originally requested Walsh code size.

In accordance with a preferred embodiment of the present invention, the allocator **20** maintains and/or has access to lists of fragmented Walsh codes which are organized, e.g., in a record, database or otherwise. Preferably, for each WCF, respectively, one such list, nominally termed herein a fragment list, is maintained for each Walsh code size. The fragment list identifies and/or includes the fragmented Walsh codes existing in its corresponding WCF and size. For simplicity, however, as the process **100** is, at this point, restricted to the selected WCF, the fragment lists are only going to be referred to by their corresponding sizes. The respective fragment lists are by default initially populated with the root node Walsh codes of each family, i.e., **W**₀⁴, **W**₁⁴, **W**₂⁴ and **W**₃⁴.

Continuing on with the process **100**, at decision step **122**, it is determined if req_code is on the w_size fragment list. If the determination of step **122** is positive or yes, step **130** is then executed. Otherwise, if the determination of step **122** is negative or no, determination step **124** is executed. When req_code is a wild card, it is deemed a match for or equal to any code found on the w_size fragment list.

At decision step **124**, it is determined if w_size is equal to **4**, i.e., the smallest size Walsh code. If the determination of step **124** is positive or yes, then at step **126** a "NO_CODE" is returned to the requesting object or device by the allocator **20**. NO_CODE indicates to the requesting object or device that no Walsh codes are available for allocation, i.e., all the Walsh codes fitting the request are either busy or blocked. That is to say, if the process **100** has tunneled down to the smallest size and no matching codes were found on any of the fragment lists, then the smallest size Walsh code is busy and consequently its progeny (i.e., all the Walsh codes in that family) are blocked. Moreover, in the case of a request for a particular Walsh code, no other family contains the Walsh code specified, this is ensured insomuch as the family containing the particular Walsh code was identified in step **118**. In the case of a request for a high speed data channel were a particular family is set aside therefor, again, the process **100** is already operating within the reserved family. Similarly, in the case of a request for a non-specific Walsh code, the process is already operating in the family with the lowest count such that if a Walsh code is not available in that family, one will not be available in another family.

Provided, the determination of step **124** is negative or no (i.e., the smallest size has not yet been reached), the process **100** reduces the size being examined to the next smaller size at step **128** and then returns to decision step **122**. Reducing the size being examined or reducing the size at which operations are carried out is referred to as tunneling down, while increasing the size being examined or increasing the size at which operations are carried out is referred to as tunneling up. In any event, for a non-specific or wild card req_code, step **128** is implemented by merely setting w_size equal to w_size/2. When a particular code is specified in the request, however, step **128** also involves determining the parent of the particular code by setting req_code equal to req_code%w_size, after the size has been reduced by half. Accordingly, with the execution of step **128**, when a particular Walsh code has been specified in the request, the process **100** tunnels down, one parent at a time, through the particular series of parental ancestors corresponding to the particular code specified in the request. In this manner, it is ensured that the path being followed or traced contains the particular Walsh code specified in the request.

Steps **122** through **128**, in effect, operate to successively check the fragment lists for Walsh codes matching or suited to the received request. The iterative loop starts with the fragment list corresponding to the initial size requested and steps or tunnels down in size with each iteration. The loop is broken or terminated (by advancing to step **130**) when a matching or suitable code is found on one of the fragment lists, or (by advancing to step **126**) when the smallest size fragment list is reached and still no fragment is found. If no code is found on a fragment list of size equal to or less than that request, then no codes are available for allocation.

At step **130**, the code on the w_size fragment list matching req_code is removed therefrom and it is marked or designated as blocked. At this point, if req_code corresponds to a wild card value, it is preferably set equal to the value of the code removed from the w_size fragment list. Note, when there are a plurality of codes on the w_size fragment list that potentially match a wild card req_code, then any one of the plurality may be selected and removed.

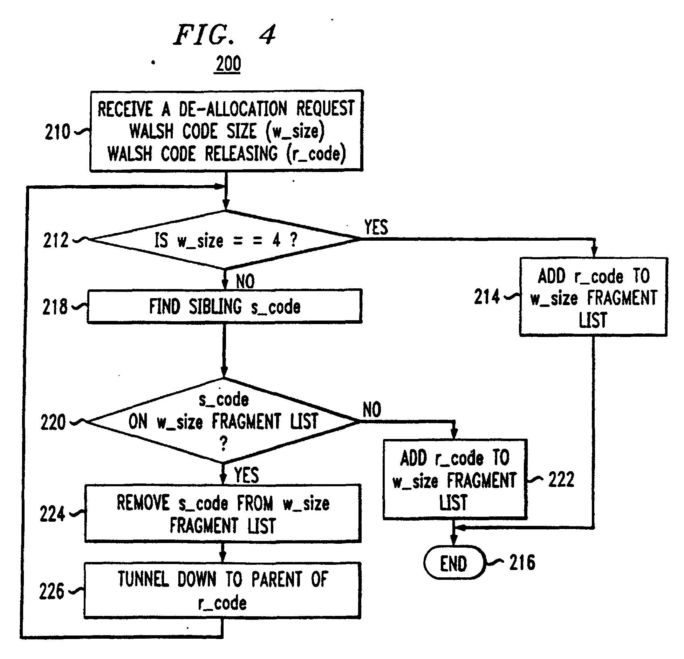

Next, at decision step **132**, it is determined if w_size is equal to req_size. If the determination of step **132** is positive or yes, at step **134** the status of req_code is marked or designated as busy, and the Walsh code corresponding to req_code is allocated or returned to the requesting object or device by the allocator **20**. Following step **134**, the process **100** terminates or ends at step **136**, optionally, after marking or designating the progeny of req_code as blocked. Preferably, after step **136**, the allocator **20** awaits the next process to be carried out, be it again process **100** or the de-allocation process **200** (described with reference to FIGURE 4).

On the other hand, if the determination of step **132** is negative or no, that means, in steps **122** through **128**, the process **100** tunneled down one or more sizes to find a matching or otherwise suitable code on a fragment list. Accordingly, at step **138** the process **100** tunnels back up, blocking one code and fragmenting the corresponding sibling with each step up in size. The tunneling up is iteratively carried out in the processing loop comprising steps **132, 138** and **140**. The loop extends successively up in size from the lowest code size reached in the tunneling down process and continues until req_size is reached.

In a preferred embodiment, when no particular code is specified in the initial request, step **138** is carried out by first setting w_size equal to w_size*2 and then setting a variable "frag_code" equal to req_code+(w_size/2). Thereafter, at step **140**, the w_size Walsh code corresponding to frag_code is placed on the w_size fragment list, and the w_size Walsh code corresponding to req_code is marked or designated as blocked.

On the other hand, when a particular code is specified in the initial request, step **138** is carried out by first setting w_size equal to w_size*2 and then determining if scode%w_size is equal to req_code. If scode%w_size is equal to req_code, then frag_code is set equal to req_code+(w_size/2) before proceeding to step **140**, otherwise frag_code is set equal to req_code and req_code is set equal to req_code+(w_size/2) before proceeding to step **140**. In this manner, it is ensured that, while tunneling up, the proper siblings at each successive step up in size are appropriately blocked and fragmented such that the particular code specified is in the chain of blocked siblings. That is, via the tunneling up carried out in step **138** when a particular code is specified in the initial request, the parental ancestors of the specifically requested code are blocked while their siblings are fragmented.

In both cases (i.e., specific and non-specific code requests), following step **140**, the process **100** returns to decision step **132**. Note, in the allocation process **100** described herein, marking or designating codes as blocked or busy is optional. By the mere operation and/or functioning of the process **100** in conjunction with the fragment lists, blocked or busy codes will not be allocated even if they are not so marked or designated. However, such markings or designations are found to be helpful in certain system tests, e.g., in auditing or tracking the performance of the allocator **20**. Regardless of whether or not the markings or designations are being employed, the count for each family is maintained and/or re-determined after each allocation or de-allocation.

De-allocation allows the reuse of codes which cease being busy, i.e., those codes which were previously allocated but no longer in use currently. However, simply making a code available or reassigning it to an available status is insufficient. To ensure the continued efficient use of the Walsh codes, it is also desired that the fragment lists be appropriate updated, and optionally, any codes marked or designated as blocked should also be properly reclassified when appropriate. In accordance with a preferred embodiment of the present invention, the flow chart of FIGURE 4 illustrates the de-allocation process **200** carried out by the Walsh code allocator **20**, i.e., the method by which Walsh codes are de-allocated.

The process **200** begins at step **210** with the allocator **20** receiving an indication that a previously busy Walsh code is being released, i.e., a request for de-allocation. For example, the indication is generated in conjunction with and/or is precipitated by the closing of a previously open channel, be it an overhead channel, a fundamental channel of voice or data traffic, or otherwise. The received de-allocation request includes an indication of the particular Walsh code being released and its size. In the flow chart, the size is denoted by the variable "w_size" and the code is denoted by the variable "r_code". Both are initially set in accordance with the received request. The initial r_code value dictates the WCF to which the process **200** is restricted for a given de-allocation request. Accordingly, for simplicity herein, the particular WCF is not referred to further in describing the process **200**.

Next, at decision step **212** it is determined if w_size is equal to 4 (i.e., the smallest Walsh code size). If the determination of step **212** is positive or yes, the code corresponding to r_code is added (at step **214**) to the w_size fragment list prior to the process **200** terminating or ending at step **216**. Preferably, after step **216**, the allocator **20** awaits the next process to be carried out, be it again process **200** or the allocation process **100** (described with reference to FIGURE 3).

On the other hand, if the determination of step **212** is negative or no, the sibling of r_code is determined and/or selected at step **218**. The sibling, denoted by "s_code", is found as follows: if r_code is greater than or equal to w_size/2 then s_code is set equal to r_code-(w_size/2), otherwise s_code is set equal to r_code+(w_size/2).

It is determined, at decision step **220**, if s_code is on the w_size fragment list. If the determination of step **220** is negative or no, r_code is added (at step **222**) to the w_size fragment list and the process **200** advances to the ending or termination step **216**. If the determination of step **220** is positive or yes, s_code is removed (at step **224**) from the w_size fragment list and the process **200** advances to the step **226**.

0 At step **226**, the process **200** tunnels down to the parent of r_code. This is achieved by first setting w_size equal to w_size/2 and then setting r_code equal to r_code%w_size. Following step **226**, the process **200** loops back to decision step **212**, optionally, after marking or designating the Walsh code corresponding to the current r_code of the current w_size to the temporary status of "unknown". The temporary unknown status persists until the next iteration when it will be determined if the corresponding Walsh code is to be put on a fragment list or not, at which point, it is optionally marked or designated appropriately.

The process **200** continues to loop back iteratively until either the smallest code size is reached (i.e., w_size is equal to 4), or until s_code is not on the w_size fragment list. In either case, at decision steps **212** or **220**, respectively, the process **200** branches out of the loop. At that point, the process **200** has ensured that the respective fragment lists have been appropriately updated (with the exceptions of the final updates executed via steps **214** and **222**, respectively) in view of the requested de-allocation received in step **210**.

The invention has been described with reference to the preferred embodiments. Obviously, modifications and alterations will occur to others upon reading and understanding the preceding detailed description. For example, the present invention is applicable to and/or readily implemented in connection with a variety of network environments and/or protocols, such as, Universal Mobil Telecommunications System (UMTS) and the like.

## Claims

1. A method of allocating CDMA codes from a set thereof for use in connection with a wireless network **(A)**, said codes being configured in a tree structure which progressively branches in a bifurcated manner from codes of a smallest size to codes of a largest size, said tree being arranged such that descendant codes branching from any given code are not orthogonal to that given code, the method including: a) identifying a desired size of a code to be allocated; b) determining if there exists a code of the desired size whose sibling code is unavailable, sibling codes being any pair of mutually orthogonal codes of the same size that are both non-orthogonal to the code from which the pair branches; c) allocating a code of the desired size whose sibling code is unavailable when the determination of step b) is that there does exist a code of the desired size whose sibling code is unavailable; d) determining if there exists a code of smaller than the desired size whose sibling code is unavailable when the determination of step b) is that there does not exist a code of the desired size whose sibling code is unavailable; e) identifying a code of smaller than the desired size whose sibling code is unavailable when the determination of step d) is that there does exist a code of smaller than the desired size whose sibling code is unavailable; and, f) allocating a code of the desired size which is a descendant code of the identified code when a code is identified in step e), said method being **characterized by**:
dividing the set of codes into a plurality of families, each family including a root code and all the root code's descendant codes; and
selecting a particular family from the plurality thereof such that steps a) to f) are carried out with respect to the codes in the particular family, wherein the particular family selected has a number of unavailable codes of the largest size which is no greater than the number of unavailable codes of the largest size in any other unselected family.

2. A method according to claim 1, wherein step d) includes:
progressing iteratively through successively smaller sizes starting at a size just smaller than the desired size; and,
determining, with each iteration, if there exists a code of the progressed to size whose sibling is unavailable.

3. A method according to claim 2, wherein the progressing continues only until a code of the progressed to size whose sibling is unavailable is found to exist.

4. A method according to claim 3, wherein the identified code of step e) is of the progressed to size reached in step d).

5. A CDMA code allocator **(20)** for use in connection with a wireless telecommunications network **(A)**, said CDMA codes being configured in a tree structure which progressively branches in a bifurcated manner from CDMA codes of a smallest size to CDMA codes of a largest size, said tree being arranged such that the CDMA codes branching from any root CMDA code are not orthogonal to that root CDMA code, the allocator including: a receiving means that receives a request for a CDMA code; selection means for selecting a CDMA code suited to the request received, said selection means favoring the selection of CDMA codes that are currently available for allocation and mutually orthogonal to CDMA codes which are currently unavailable for allocation; and, allocation means for outputting from the allocator at least one of i) the selected CDMA code when a CDMA code is selected by the selection means, and ii) an indication that a CDMA code suited to the request received is not available for allocation; said allocator **(20)** being **characterized by**:
determination means for choosing, based on the request received, a CDMA code family from which the allocator **(20)** selects a CDMA code, said determination means choosing from a plurality of different CDMA code families which each include a plurality of CDMA codes of at least two different sizes, each CDMA code family including a root CDMA code and all its descendent codes, the determination means favoring the CDMA code family having a number of unavailable codes of the largest size which is no greater than the number of unavailable codes of the largest size in any other unselected CDMA code family.

6. An allocator according to claim 5, wherein the request received by the receiving means indicates a desired CDMA code size.

7. An allocator according to claim 5, wherein the determination means chooses the family including a particular CDMA code when the particular CDMA code is specified in the request received.

8. An allocator according to claim 5, wherein one of the plurality of CDMA code families is designated for high speed data traffic such that when a request is received for a CDMA code to be used in connection with high speed data traffic, the determination means chooses the designated family.

9. An allocator according to claim 5, including:
a de-allocation means that updates fragment lists when allocated CDMA codes cease being allocated, said fragment lists having listed thereon fragmented CDMA codes, a fragmented CDMA code being one whose counterpart is unavailable for allocation, said counterpart being the mutually orthogonal CDMA code of the same size as the fragmented CDMA code and branching from the same CDMA code in the tree structure.

## Patentansprüche

1. Verfahren zur Zuweisung von CDMA-Kodes aus einer Menge derselben zur Verwendung in Verbindung mit einem drahtlosen Netz (A), wobei diese Kodes in einer Baumstruktur konfiguriert sind, die sich fortschreitend aus Kodes einer kleinsten Größe in Kodes einer größten Größe gabelförmig verzweigt, wobei der Baum so angeordnet ist, daß von einem beliebigen gegebenen Kode abzweigende absteigende Kodes nicht orthogonal zu diesem gegebenen Kode sind, mit folgenden Schritten: a) Kennzeichnen einer gewünschten Größe eines zuzuweisenden Kodes; b) Bestimmen, ob ein Kode der gewünschten Größe besteht, dessen Geschwisterkode nicht verfügbar ist, wobei Geschwisterkodes ein beliebiges Paar zueinander orthogonaler Kodes derselben Größe sind, die beide nicht orthogonal zu dem Kode sind, von dem das Paar abzweigt; c) Zuweisen eines Kodes der gewünschten Größe, dessen Geschwisterkode nicht verfügbar ist, wenn die Bestimmung des Schritts b) ist, daß ein Kode der gewünschten Größe besteht, dessen Geschwisterkode nicht verfügbar ist; d) Bestimmen, ob ein Kode von geringerer als der gewünschten Größe besteht, dessen Geschwisterkode nicht verfügbar ist, wenn die Bestimmung des Schritts b) ist, daß kein Kode der gewünschten Größe besteht, dessen Geschwisterkode nicht verfügbar ist; e) Identifizieren eines Kodes von geringerer als der gewünschten Größe, dessen Geschwisterkode nicht verfügbar ist, wenn die Bestimmung des Schritts d) ist, daß ein Kode von geringerer als der gewünschten Größe besteht, dessen Geschwisterkode nicht verfügbar ist; und f) Zuweisen eines Kodes der gewünschten Größe, der ein Nachkömmlingskode des identifizierten Kodes ist, wenn ein Kode im Schritt e) identifiziert wird, **gekennzeichnet durch**:
Teilen der Menge von Kodes in eine Mehrzahl von Familien, wobei jede Familie einen Wurzelkode und alle Nachkömmlingskodes des Wurzelkodes umfaßt; und
Auswählen einer bestimmten Familie aus der Mehrzahl derselben, so daß Schritte a) bis f) in bezug auf die Kodes in der bestimmten Familie ausgeführt werden, wobei die bestimmte ausgewählte Familie eine Anzahl nicht verfügbarer Kodes der größten Größe aufweist, die nicht größer als die Anzahl nicht verfügbarer Kodes der größten Größe in jeder anderen nicht ausgewählten Familie ist.

2. Verfahren nach Aspruch 1, wobei der Schritt d) folgendes umfaßt:
iteratives Fortschreiten durch immer geringere Größen, beginnend mit einer etwas geringeren Größe als der gewünschten Größe; und
Bestimmen bei jeder Iteration, ob ein Kode der Größe, zu der fortgeschritten worden ist, besteht, dessen Geschwisterkode nicht verfügbar ist.

3. Verfahren nach Anspruch 2, wobei das Fortschreiten nur so lange andauert, bis das Bestehen eines Kodes der Größe, zu der fortgeschritten worden ist, und dessen Geschwisterkode nicht verfügbar ist, festgestellt wird.

4. Verfahren nach Anspruch 3, wobei der identifizierte Kode des Schritts e) von der im Schritt d) erreichten Größe ist, zu der fortgeschritten worden ist.

5. CDMA-Kodezuordner (20) zur Verwendung in Verbindung mit einem drahtlosen Telekommunikationsnetz (A), wobei die CDMA-Kodes in einer Baumstruktur konfiguriert sind, die sich fortschreitend von CDMA-Kodes einer kleinsten Größe zu CDMA-Kodes einer größten Größe gabelförmig verzweigt, wobei der Baum so angeordnet ist, daß die von einem beliebigen CDMA-Wurzelkode abzweigenden CDMA-Kodes nicht orthogonal zu diesem CDMA-Wurzelkode sind, wobei der Zuordner folgendes umfaßt: ein Empfangsmittel, das eine Anforderung eines CDMA-Kodes empfängt; Auswählmittel zum Auswählen eines für die empfangene Anforderung geeigneten CDMA-Kodes, wobei die Auswählmittel die Auswahl von CDMA-Kodes bevorzugen, die gegenwärtig zur Zuweisung verfügbar und orthogonal zu CDMA-Kodes sind, die gegenwärtig nicht für die Zuordnung zur Verfügung stehen; und Zuordnungsmittel zum Ausgeben vom Zuordner von mindestens i) dem ausgewählten CDMA-Kode, wenn ein CDMA-Kode durch das Auswählmittel ausgewählt wird, oder ii) einer Anzeige, daß ein für die empfangene Anforderung geeigneter CDMA-Kode nicht für die Zuweisung zur Verfügung steht, **gekennzeichnet durch** folgendes:
Bestimmungsmittel zum Wählen auf Grundlage der empfangenen Anforderung einer CDMA-Kodefamilie, aus der der Zuordner (20) einen CDMA-Kode auswählt, wobei das Bestimmungsmittel aus einer Mehrzahl unterschiedlicher CDMA-Kodefamilien auswählt, die jeweils eine Mehrzahl von CDMA-Kodes von mindestens zwei unterschiedlichen Größen umfassen, wobei jede CDMA-Kodefamilie einen CDMA-Wurzelkode und alle seine Nachkömmlingskodes umfaßt, wobei das Bestimmungsmittel die CDMA-Kodefamilie mit einer Anzahl nicht verfügbarer Kodes der größten Größe bevorzugt, die nicht größer als die Anzahl nicht verfügbarer Kodes der größten Größe in jeder anderen, nicht ausgewählten CDMA-Kodefamilie ist.

6. Zuordner nach Anspruch 5, wobei die vom Empfangsmittel empfangene Anforderung eine gewünschte CDMA-Kodegröße anzeigt.

7. Zuordner nach Anspruch 5, wobei das Bestimmungsmittel die Familie mit einem bestimmten CDMA-Kode wählt, wenn dieser CDMA-Kode in der empfangenen Anforderung angegeben wird.

8. Zuordner nach Anspruch 5, wobei eine der Mehrzahl von CDMA-Kodefamilien für hochratigen Datenverkehr bereitgestellt wird, so daß, wenn eine Anforderung für einen in Verbindung mit hochratigem Datenverkehr zu benutzenden CDMA-Kode empfangen wird, das Bestimmungsmittel die bereitgestellte Familie wählt.

9. Zuordner nach Anspruch 5, mit folgendem:
einem Freigabemittel, das Fragmentlisten aktualisiert, wenn zugewiesene CDMA-Kodes nicht mehr zugewiesen sind, wobei in den Fragmentlisten fragmentierte CDMA-Kodes aufgeführt sind, wobei ein fragmentierter CDMA-Kode ein Kode ist, dessen Gegenstück nicht für die Zuweisung zur Verfügung steht, wobei dieses Gegenstück der dazu orthogonale CDMA-Kode derselben Größe wie der fragmentierte CDMA-Kode ist und vom selben CDMA-Kode in der Baumstruktur abzweigt.

## Revendications

1. Procédé d'attribution de codes CDMA à partir d'un ensemble de ceux-ci en vue de les utiliser avec un réseau sans fil (A), lesdits codes étant configurés en une structure arborescente qui se ramifie progressivement de manière bifurquée de codes d'une taille la plus petite à des codes d'une taille la plus grande, ladite arborescence étant agencée de telle sorte que des codes descendants découlant de tout code donné ne soient pas orthogonaux à ce code donné, le procédé comportant : a) l'identification d'une taille désirée d'un code à attribuer ; b) la détermination s'il existe un code de la taille désirée dont le code frère n'est pas disponible, les codes frères étant toute paire de codes mutuellement orthogonaux de la même taille qui ne sont ni l'un ni l'autre orthogonal au code dont découle la paire ; c) l'attribution d'un code de la taille désirée dont le code frère n'est pas disponible quand la détermination de l'étape b) est qu'il existe un code de la taille désirée dont le code frère n'est pas disponible ; d) la détermination s'il existe un code d'une taille plus petite que la taille désirée dont le code frère n'est pas disponible quand la détermination de l'étape b) est qu'il n'existe pas de code de la taille désirée dont le code frère n'est pas disponible ; e) l'identification d'un code d'une taille plus petite que la taille désirée dont le code frère n'est pas disponible quand la détermination de l'étape d) est qu'il existe un code d'une taille plus petite que la taille désirée dont le code frère n'est pas disponible ; et f) l'attribution d'un code de la taille désirée qui est un code descendant du code identifié quand un code est identifié à l'étape e), ledit procédé étant **caractérisé par** :
la division de l'ensemble de codes en une pluralité de familles, chaque famille comportant un code racine et tous les codes descendants du code racine ; et
la sélection d'une famille particulière à partir de la pluralité de celles-ci, de telle sorte que les étapes a) à f) soient exécutées relativement aux codes dans la famille particulière, dans laquelle la famille particulière sélectionnée a un nombre de codes non disponibles de la plus grande taille qui n'est pas supérieur au nombre de codes non disponibles de la plus grande taille dans n'importe quelle autre famille non sélectionnée.

2. Procédé selon la revendication 1, dans lequel l'étape d) comporte :
la progression itérative par des tailles successivement plus petites à une taille juste plus petite que la taille désirée ; et
la détermination, avec chaque itération, s'il existe un code de la taille à laquelle la progression a abouti dont un frère n'est pas disponible.

3. Procédé selon la revendication 2, dans lequel la progression continue uniquement lorsqu'il s'avère qu'il existe un code de la taille à laquelle la progression a abouti dont un frère n'est pas disponible.

4. Procédé selon la revendication 3, dans lequel le code identifié de l'étape e) est de la taille à laquelle la progression a abouti à l'étape d).

5. Dispositif d'attribution de codes CDMA (20) destiné à être utilisé avec un réseau de télécommunications sans fil (A), lesdits codes CDMA étant configurés en une structure arborescente qui se ramifie progressivement de manière bifurquée de codes CDMA d'une taille la plus petite à des codes CDMA d'une taille la plus grande, ladite arborescence étant agencée de telle sorte que les codes CDMA découlant de tout code CDMA racine donné ne soient pas orthogonaux à ce code CDMA racine, le dispositif d'attribution comportant : a) un moyen de réception qui reçoit une demande de code CDMA, un moyen de sélection pour sélectionner un code CDMA convenant à la demande reçue, ledit moyen de sélection favorisant la sélection de codes CDMA qui sont actuellement attribuables et mutuellement orthogonaux aux codes CDMA qui ne sont pas actuellement attribuables ; et un moyen d'attribution pour sortir du dispositif d'attribution au moins l'un i) du code CDMA sélectionné quand un code CDMA est sélectionné par le moyen de sélection, et ii) une indication qu'un code CDMA adapté à la demande reçue n'est pas attribuable ; ledit dispositif d'attribution (20) étant **caractérisé par** :
un moyen de détermination pour choisir, en fonction de la demande reçue, une famille de codes CDMA à partir de laquelle le dispositif d'attribution (20) sélectionne un code CDMA, ledit moyen de détermination choisissant parmi une pluralité de familles de codes CDMA différentes qui comportent chacune une pluralité de codes CDMA d'au moins deux tailles différentes, chaque famille de codes CDMA comportant un code CDMA racine et tous ses codes descendants, le moyen de détermination favorisant la famille de codes CDMA ayant un nombre de codes non disponibles de la plus grande taille qui n'est pas supérieur au nombre de codes non disponibles de la plus grande taille dans n'importe quelle autre famille non sélectionnée de codes CDMA.

6. Dispositif d'attribution selon la revendication 5, dans lequel la demande reçue par le moyen de réception indique une taille de code CDMA désirée.

7. Dispositif d'attribution selon la revendication 5, dans lequel le moyen de détermination choisit la famille comportant un code CDMA particulier quand le code CDMA particulier est spécifié dans la demande reçue.

8. Dispositif d'attribution selon la revendication 5, dans lequel l'une de la pluralité de familles de codes CDMA est désignée pour un trafic de données à grande vitesse de telle sorte que lorsqu'une demande de code CDMA à utiliser relativement à un trafic de données à grande vitesse est reçue, le moyen de détermination choisisse la famille désignée.

9. Dispositif d'attribution selon la revendication 5, comportant :
un moyen de désattribution qui met à jour des listes de fragments lorsque des codes CDMA attribués cessent d'être attribués, lesdites listes de fragments énumérant des codes CDMA fragmentés, un code CDMA fragmenté étant un code dont l'homologue n'est pas attribuable, ledit homologue étant le code CDMA mutuellement orthogonal de la même taille que le code CDMA fragmenté et découlant du même code CDMA dans la structure arborescente.
